(19) Europäisches Patentamt
European Patent Office
Office européen des brevets

(11) Publication number: **0 016 195**
**B1**

(12) **EUROPEAN PATENT SPECIFICATION**

(45) Date of publication of patent specification: **29.12.82**

(51) Int. Cl.³: **B 63 B 59/04,** B 08 B 17/00, C 09 D 5/16, C 08 L 83/00

(21) Application number: **79901013.7**

(22) Date of filing: **03.09.79**

(86) International application number: **PCT/GB79/00146**

(87) International publication number: **WO 80/00554 03.04.80 Gazette 80/7**

(54) **PREVENTING FOULING ON MARINE STRUCTURES.**

(30) Priority: **05.09.78 GB 3561678**

(43) Date of publication of application: **01.10.80 Bulletin 80/20**

(45) Publication of the grant of the patent: **29.12.82 Bulletin 82/52**

(84) Designated Contracting States: **DE FR GB NL SE**

(56) References cited:
**DE - A - 2 101 074**
**FR - A - 2 297 901**
**GB - A - 1 175 978**
**US - A - 3 702 778**

**The file contains technical information submitted after the application was filed and not included in this specification**

(73) Proprietor: **INTERNATIONAL PAINT public limited company**
**Henrietta House 9 Henrietta Place**
**London W1A 1AD (GB)**

(72) Inventor: **SYKES, Brian Richard**
**37 Beech Court Darrass Hall**
**Newcastle-upon-Tyne NE20 9NE (GB)**
Inventor: **NEILD, John Harold**
**32 Cowdray Court Kenton Bank Foot**
**Newcastle-upon-Tyne (GB)**

(74) Representative: **Hale, Stephen Geoffrey et al,**
**J.Y. & G.W. Johnson Furnival House 14/18 High Holborn**
**London WC1V 6DE (GB)**

EP 0 016 195 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

# Preventing fouling on marine structures

This invention relates to the prevention of fouling on marine structures, (namely man-made structures, frequently of metal but also of other structural materials such as concrete, which are at least partially immersed in sea-water during normal use, either as static structures or as moving objects), for example oil production platforms and drilling rigs. Such structures are liable to heavy fouling from seaweed, barnacles, mussels and the like. The resistance of a thick layer of fouling to waves and the currents can cause unpredictable and potentially dangerous stresses in the marine structure particularly when this is resting on the sea bed in deep water.

The use of anti-fouling paints containing biocides which are gradually released from the paint does not provide a permanent solution to fouling of static marine structures. These anti-fouling paints have a limited active life and repainting an oil platform *in situ* is impractical.

Moreover, marine structures such as oil production platforms have to be inspected periodically for corrosion and for stress cracks in the structure. The structure needs to be free from fouling for proper inspection.

A method according to the invention for preventing fouling of a marine structure by applying to it a layer of a cured room-temperature-vulcanisable silicone rubber, is characterised by securing to the underwater surface of the marine structure (i.e. the surface which in normal use of the marine structure is at or below the water level) a coated flexible reinforcing sheet material having an outermost (i.e. water-contacting) surface of the cured room-temperature-vulcanisable silicone rubber and at least one inner coating layer of an elastomer between the reinforcing sheet material and the cured, room-temperature-vulcanisable silicone rubber surface.

An anti-fouling cladding according to the invention, for a marine structure and comprising a silicone rubber, is characterised in that the cladding comprises a flexible reinforcing sheet material coated with at least one inner coating layer of an elastomer and an outer coating layer of a cured room-temperature-vulcanisable silicone rubber.

The invention also includes a marine structure having secured thereto at and/or below the water-line a silicone rubber which reduces the liability of the structure to be fouled by marine organisms, characterised in that the marine structure has secured thereto at and/or below the water-line an anti-fouling cladding according to the invention.

Silicone rubbers have been proposed for use in anti-fouling paints of films in British Patent Specifications Nos. 1,307,001 and 1,470,465 and U.S. Patent No. 3,702,778. Their anti-fouling action is unique in that they do not poison marine organisms but prevent them securing satisfactory adhesion to the surface, apparently by a physical effect. There are, however, practical difficulties in the use of silicone rubber anti-fouling paints or films. It is difficult to make them adhere well to a marine surface and the applied paint films or coatings are mechanically rather weak and liable to damage. The present invention employs a reinforcing sheet coated with a silicone rubber layer and this gives mechanical support to the silicone rubber and the fabric can be securely attached to the marine structure.

British Patent Specification No. 1,175,978 describes a method of preventing marine fouling of a submerged object by covering it with a composition comprising 0.02 to 20% by weight of a triorgano tin compound as toxic agent dissolved in an elastomer selected from neoprene rubber, butyl rubber, styrene-butadiene rubber, polybutadiene rubber, ethylene-propylene rubber, polyurethane, nitrile rubber, ethylene-propylene terpolymers, natural rubber, epichlorhydrin rubber and silicone rubber, the composition being vulcanised with a vulcanising agent.

The sheet material used as substrate for the silicone rubber layer is a reinforcing sheet material, i.e. a sheet of it has substantially greater tensile and tear strength than a silicone rubber sheet of equal weight. Preferably it is a fabric, for example a plain woven fabric of nylon or polyester yarn. Alternatively, however, it can be a tough plastics film such as an oriented polyester or polypropylene film.

More than one coating layer is applied to the substrate, e.g. fabric. This builds up sufficient thickness of coating to obscure the weave of the fabric when the latter is used as substrate. Only the outermost coating layer need be of silicone rubber and from cost considerations it is generally preferred that at least one inner layer is an alternative elastomer such as natural rubber, nitrile rubber, neoprene polychloroprene rubber or Hypalon rubber which is based on polyethylene substituted by chlorine and sulphonyl chloride groups. The first coat applied to the fabric may be a keying coat, for example a rubber solution containing a polyfunctional isocyanate, and an adhesion promoter can also be applied, for example by dip coating with a solution containing a resorcinol resin and/or an epoxy resin, as is known in fabric coating. Good adhesion of the silicone rubber to the inner elastomer coating(s) can be achieved by the use of one or more intermediate layers based on a mixture of the silicone rubber and the elastomer used for the inner layer(s).

The thickness of the silicone rubber coating should be sufficient to give a continuous surface of silicone rubber. The thickness is usually equivalent to a coating weight of at least 10

$g/m^2$ and preferably about 25 $g/m^2$ and can be up to 1 mm or even more.

The room-temperature-vulcanisable silicone rubber is preferably an oligomeric silicone rubber having hydroxyl end groups, for example those sold under the trade marks Silicoset 105, Dow Corning RTV 3110 and General Electric RTV 11. Such a silicone rubber generally has a molecular weight in the range 40,000—100,000 and a viscosity of 10—1,000 Stokes before curing and can be represented by the formula

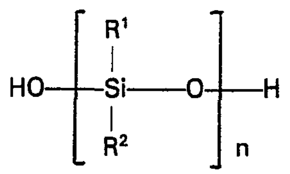

where n is an integer corresponding to the degree of polymerisation and $R^1$ and $R^2$ are the same or different alkyl, aryl or vinyl groups, the repeating units being identical or different. The silicone rubber is generally cured using an aminoacetoxyoxime or alkoxysilane crosslinking agent and a curing catalyst, for example dibutyl tin dilaurate, stannous octoate or a platinum salt.

The room-temperature-vulcanisable silicone rubber can be subjected to an accelerated cure at temperatures above ambient, for example in the range 50°—100°C. An intermediate layer of a heat-curable silicone rubber can be used to improve the adhesion of the room-temperature-vulcanisable silicone rubber, optionally with a further layer which is a mixture of the heat-curable silicone rubber and the room-temperature-vulcanisable silicone rubber. The preferred curing procedure for such a multi-coated sheet is to heat-cure, usually at a temperature in the range 100—200°C, when all the layers containing heat-curable material have been applied and to cure a subsequently applied layer or layers of room-temperature-vulcanisable silicone rubber at a temperature which is in any case substantially below that used for heat-curing and may be as low as ambient temperature.

The heat-curable silicone rubber is generally based on a long-chain siloxane for example a polydimethyl siloxane which can be crosslinked by heat in the presence of a tin-containing catalyst or one which can be crosslinked using an oxidising agent, for example by the incorporation of a peroxide curing agent.

The room-temperature-vulcanisable silicone rubbers are slow in curing compared to many fabric coatings. It may be preferred to interleave the final coated sheet material with a sheet having a release surface of, for example, polyethylene, so that the coated sheet can be rolled up before the silicone rubber is fully cured.

The silicone rubber preferably contains a silicone oil, for example as described and claimed in our British Patent Specification No. 1,470,465. The silicone oil is generally a polymer of molecular weight 2,000—30,000 and viscosity 20—1,000 centistokes and comprises repeating

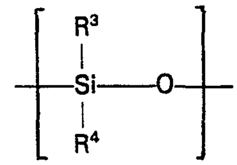

units where $R^3$ and $R^4$ are the same or different alkyl or aryl groups, the repeating units being identical or different. Particularly preferred silicone oils are those where $R^3$ is an alkyl group and $R^4$ is an aryl group in at least some of the repeating units, for example methylphenyl silicone oils such as those sold under the trade marks Dow Corning DC 510, DC 550 and DC 710. Silicone oils containing fluorocarbon groups can also be used. The silicone oil is generally used in a proportion of 1—50 *per cent* by weight, preferably 5—30 *per cent* by weight, based on the silicone rubber.

A preferred material according to the invention for use as an anti-fouling cladding for a marine structure therefore comprises a flexible reinforcing sheet material, preferably a coated fabric, coated with at least one inner coating layer of an elastomer and an outer coating layer of a cured room-temperature-vulcanisable silicone rubber produced by curing a room-temperature-vulcanisable silicone rubber having hydroxyl end groups in the presence of 1 to 50 *per cent* by weight of a silicone oil. The silicone oil is generally mixed with the silicone rubber before curing, in order to give good dispersion of the oil on the rubber.

The coated flexible sheet material, e.g. fabric, is preferably secured to the marine structure by wrapping it around an underwater surface of the marine structure and securing it by clamping bands. This method of securing allows relatively easy removal of the cladding for inspection of the structure. The coated flexible sheet material can be in the form of a band which is spirally wrapped around the structure, or for larger diameter structures a sheet of the coated flexible sheet material can be secured around the structure by clamping bands. This procedure, unlike painting, can be carried out under water.

In an alternative method of securing the coated flexible sheet material to the marine structure, the reverse face of the flexible sheet material is coated with an adhesive capable of bonding it to an underwater surface of the marine structure. The particular adhesive depends on the conditions under which the anti-fouling cladding is to be bonded to the marine structure. Where the cladding is to be applied to the structure before it is immersed in the sea any sea-water-resistant adhesive can be used, for example a nitrile or neoprene rubber or an

epoxy adhesive. Where the cladding is to be applied to a structure *in situ*, for example at and/or below the water line of an oil production platform already in position on the sea-bed, the adhesive must be capable of forming a bond under water. One example of an underwater adhesive is an epoxy resin, for example a low molecular weight condensate of bisphenol-A epichlorhydrin, used in conjunction with a polyamine curing agent which is insoluble in and insensitive to water.

When adhesives are not used, the reverse face of the flexible sheet material can be left uncoated, or a protective rubber coating can be applied.

Although the invention is particularly applicable to the prevention of fouling of marine structures which are static for long periods such as oil production platforms, drilling rigs and fish farming tanks, the coated flexible sheet material can also be applied to ships' hulls, for example by adhering sheets of the coated flexible sheet material to the ship's hull. The coated flexible sheet material is preferably applied to the marine structure from the highest point the sea reaches on the structure to a depth of up to 10 metres below the lowest water line.

The invention is illustrated by the following example:

Example

A plain weave fabric of 165 cm width formed from 940 decitex low shrinkage nylon yarn was dipped in a solution of resorcinol/formaldehyde resin, coated with a key coat of a rubber solution containing a polyfunctional isocyanate and then successive coats of neoprene rubber to a total coating weight of 250 grams per square metre. This obscured the fabric weave. The back face of the fabric was coated similarly to a total coating weight of 50 grams per square metre.

The resulting neoprene rubber-coated fabric was coated with a 25 $g/m^2$ coat of 1:1 by weight mixture of neoprene rubber and a heat-curable silicone rubber based on polydimethyl siloxane and sold by Dow Corning as "FC.227", followed by a 25 $g/m^2$ coat of silicone rubber alone, then a 25 $g/m^2$ coat of 1:1 by weight mixture of the FC 227 silicone rubber with a room-temperature-vulcanisable silicone rubber sold by Dow Corning as "RTV 3110". The coated fabric was then heat cured for 5 minutes at 140°C

The coated fabric was further coated with a 25 $g/m^2$ coat of the RTV 3110 silicone rubber which was allowed to cure at ambient temperature and finally with a 25 $g/m^2$ coat of a composition of the RTV 3110 silicone rubber containing 20 *per cent* by weight of a methyl phenyl silicone oil sold by Dow Corning under the trade mark "DC 550". This was allowed to cure at ambient temperature and the fabric was then attached to a raft and immersed in sea water off the south coast of England. It has remained free from fouling for a period of six months. Panels having a similar surface of a cured room-temperature-vulcanisable silicone rubber compound with silicone oil have resisted fouling for up to five years.

The fabric can be applied and secured to a marine structure by cutting lengthways into two or more bands which can be spirally wrapped around the marine structure and then secured by clamping bands or the coated fabric can be wrapped at full width around a large marine structure such as the leg of an oil production platform and secured by clamping bands.

**Claims**

1. A method for preventing fouling of a marine structure by applying to it a layer of a cured, room-temperature-vulcanisable silicone rubber, characterised by securing to the underwater surface of the marine structure a coated flexible reinforcing sheet material having an outermost surface of the cured, room-temperature-vulcanisable silicone rubber and at least one inner coating layer of an elastomer between the reinforcing sheet material and the cured, room-temperature-vulcanisable silicone rubber surface.

2. A method according to claim 1, characterised in that the silicone rubber is mixed with a silicone oil.

3. A method according to claim 1 or claim 2, characterised in that the coated flexible reinforcing sheet material has an inner coating layer of a cured heat-curable silicone rubber.

4. An anti-fouling cladding for a marine structure comprising a silicone rubber, characterised in that the cladding comprises a flexible reinforcing sheet material coated with at least one inner coating layer of an elastomer and an outer coating layer of a cured room-temperature-vulcanisable silicone rubber.

5. An anti-fouling cladding according to claim 4, characterised in that the outer coating layer is produced by curing a room-temperature-vulcanisable silicone rubber having hydroxyl end groups in the presence of 1 to 50 *per cent* by weight of a silicone oil.

6. An anti-fouling cladding according to claim 5, characterised in that the silicone oil is a methyl phenyl silicone oil.

7. An anti-fouling cladding according to any of claims 4 to 6, characterised in that the flexible reinforcing sheet material is a woven fabric.

8. A marine structure having secured thereto at and/or below the water-line a silicone rubber which reduces the liability of the structure to be fouled by marine organisms, characterised in that the marine structure has secured thereto at and/or below the water-line an anti-fouling cladding as claimed in any of claims 4 to 7.

**Revendications**

1. Procédé pour prévenir la salissure sur une structure marine par application sur celle-ci

d'une couche d'un caoutchouc de silicone vulcanisable à la température ambiante réticulé, caractérisé par la fixation, sur la surface immergée de la structure marine, d'une feuille de matiére de renforcement flexible revêtue pré sentant une surface extérieure du caoutchouc de silicone vulcanisable à la température ambiante réticulé et au moins une couche de revêtement intérieure d'un élastomère entre la feuille de matière de renforcement et la surface du caoutchouc de silicone vulcanisable à la température ambiante réticulé.

2. Procédé suivant la revendication 1, caractérisé en ce que le caoutchouc de silicone est mélangé avec une huile de silicone.

3. Procédé suivant la revendication 1 ou 2, caractérisé en ce que la feuille de matière de renforcement flexible revêtue porte une couche de revêtement intérieure d'un caoutchouc de silicone réticulable à chaud réticulé.

4. Doublage antifouling pour une structure marine qui comprend un caoutchouc de silicone, caractérisé en ce que le doublage comprend une feuille de matière de renforcement flexible portant au moins une couche de revêtement intérieure d'un élastomère et une couche de revêtement extérieure d'un caoutchouc de silicone vulcanisable à la température ambiante réticulé.

5. Doublage antifouling suivant la revendication 4, caractérisé en ce que la couche de revêtement extérieure est formée par réticulation d'un caoutchouc de silicone vulcanisable à la température ambiante comprenant les radicaux hydroxyle terminaux, en présence de 1 à 50% en poids d'une huile de silicone.

6. Doublage antifouling suivant la revendication 5, caractérisé en ce que l'huile de silicone est une huile de méthylphénylsilicone.

7. Doublage antifouling suivant l'une quelconque des revendications 4 à 6, caractérisé en ce que la feuille de matière de renforcement flexible est un tissu tissé.

8. Structure marine à laquelle est fixé, au niveau de la ligne d'eau et/ou au-dessous de celle-ci, un caoutchouc de silicone qui réduit la possibilité de salissure de la structure par des organismes marins, caractérisé en ce que la structure marine porte, à sa ligne d'eau et/ou au dessous de celle-ci, un doublage antifouling suivant l'une quelconque des revendications 4 à 7.

**Patentansprüche**

1. Verfahren zur Verhinderung von Bewuchs auf marinen Konstruktionen durch Aufbringen einer Schicht eines gehärteten, bei Raumtemperatur vulkanisierbaren Silikonkautschuks darauf, dadurch gekennzeichnet, dass man an der Unterwasseroberfläche dermarinen Konstruktion ein beschichtetes, biegsames flächiges Verstärkungsmaterial mit einer zuäusserst liegenden Oberfläche aus dem gehärteten, bei Raumtemperature vulkanisierbaren Silikonkautschuk und mindestens einer inneren Ueberzugsschicht aus einem Elastomer zwischen dem flächigen Verstärkungsmaterial und der gehärteten, bei Raumtemperatur vulkanisierbaren Silikonkautschukoberfläche befestigt.

2. Verfahren nach Anspruch 1, dadurch gekennzeichnet, dass der Silikonkautschuk mit einem Silikonöl vermischt ist.

3. Verfahren nach Anspruch 1 oder 2, dadurch gekennzeichnet, dass das beschichtete, biegsame, flächige Verstärkungsmaterial eine innere Ueberzugsschicht aus gehärtetem, heisshärtbarem Silikonkautschuk aufweist.

4. Bewuchsverhindernde, einen Silikonkautschuk enthaltende Verkleidung für eine marine Konstruktion, dadurch gekennzeichnet, dass die Verkleidung aus einem mit mindestens einer inneren Ueberzugsschicht aus einem Elastomer und einer äusseren Ueberzugsschicht aus einem gehärteten, bei Raumtemperatur vulkanisierbaren Silikonkautschuk beschichteten, biegsamen flächigen Verstärkungsmaterial besteht.

5. Bewuchsverhindernde Verkleidung nach Anspruch 4, dadurch gekennzeichnet, dass die äussere Ueberzugsschicht durch Härtung eines bei Raumtemperatur vulkanisierbaren Silikonkautschuks mit Hydroxylendgruppen in Gegenwart von 1 bis 50 Gewichtsprozent eines Silikonöls hergestellt werden.

6. Bewuchsverhindernde Verkleidung nach Anspruch 5, dadurch gekennzeichnet, dass als Silikonöl ein Methylphenylsilikonöl vorliegt.

7. Bewuchsverhindernde Verkleidung nach einem der Ansprüche 4 bis 6, dadurch gekennzeichnet, dass als biegsames, flächiges Verstärkungsmaterial ein Gewebe vorliegt.

8. Marine Konstruktion mit an und/oder unter der Wasserlinie daran befestigtem Silikonkautschuk, der die Neigung der Konstruktion zum Bewuchs mit Meereslebewesen verringert, dadurch gekennzeichnet, dass an der marinen Konstruktion an und/oder unter der Wasserlinie eine bewuchsverhindernde Verkleidung nach einem der Ansprüche 4 bis 7 befestgt ist.